# EUROPÄISCHE PATENTSCHRIFT

(11) **EP 4 127 994 B1**
(45) Veröffentlichungstag und Bekanntmachung des Hinweises auf die Patenterteilung: **05.11.2025**
(21) Anmeldenummer: 21725412.7
(22) Anmeldetag: 27.04.2021
(51) Int. Cl.: G06F 21/53, G06F 21/51, G06F 21/55, G06F 9/455

(54) **VERFAHREN UND VORRICHTUNG ZUR SICHEREN INBETRIEBNAHME EINER CONTAINER-INSTANZ**
METHOD AND DEVICE FOR SECURELY STARTING A CONTAINER INSTANCE
PROCÉDÉ ET DISPOSITIF DESTINÉS À LA MISE EN SERVICE SÉCURISÉE D'UNE INSTANCE CONTENEUR

(30) Priorität: 05.05.2020 EP 20172838
(43) Veröffentlichungstag der Anmeldung: 08.02.2023
(73) Patentinhaber: Siemens Aktiengesellschaft, 80333 München (DE)
(72) Erfinder: FEIST, Christian Peter, 80689 München (DE); KNIERIM, Christian, 81373 München (DE)
(74) Vertreter: Siemens Patent Attorneys
(86) Internationale Anmeldenummer: PCT/EP2021/060939
(87) Internationale Veröffentlichungsnummer: WO 2021/224062

(56) Entgegenhaltungen:
- EP-A1- 3 557 463
- CN-A- 108 733 455
- US-B1- 10 146 936

## Beschreibung

Die Erfindung betrifft ein Verfahren und eine Vorrichtung zur sicheren Inbetriebnahme einer Container-Instanz in einer oder mehreren Ausführungsumgebungen für eine oder mehrere Komponenten, welche eine elektronische Einrichtung, ein Gerät, eine Maschine etc. einer technischen Anlage sein kann, sowie ein zugehöriges Computerprogrammprodukt.

Da industrielle Systeme (Steuergeräte, Industrie PCs, IoT- und Edge-Geräte, Cloud-Server) oft über einen langen Zeitraum im Feld verwendet werden, sind sie sich ständig ändernden Voraussetzungen und einem dynamischen Umfeld ausgesetzt. Um mit diesen Umständen umzugehen, werden vor allem neue Geräte so entwickelt, dass sie über die Nutzungszeit flexibel angepasst werden können, z.B. durch die Unterstützung von nachladbaren Applikationen mittels Container-Technologien.

Container-Technologien (z. B. Docker, runC, CoreOS rkt oder LXC) werden häufig im Zusammenhang mit dynamisch nachladbaren Applikationen in Linux-basierten Systemen verwendet. Die Laufzeitumgebung für Container-Applikationen (Container-Apps) wird dabei durch die Virtualisierung von globalen Ressourcen (z.B. Basis-Filesystem, Netzwerkinterfaces des Gerätes) erzeugt.

Container gewährleisten die Trennung und Verwaltung der auf einem Rechner genutzten Ressourcen. Ein Container-Image ist ein Abbild eines Containers. Das Image selbst kann aus mehreren aufeinander aufbauenden Schichten (Layern) bestehen, die geschützt sind (kryptographisch, speichergeschützt, etc.) und daher nicht verändert werden können. Die Layer können dabei zusammen das Dateisystem einer Container-Instanz bilden. Ein Image ist normalerweise portabel, kann in Repositories (auch Container-Registry genannt) gespeichert und mit anderen Nutzern geteilt werden. Aus einem Image können mehrere Container-Instanzen gestartet werden, d.h. eine aktive "Instanz" eines Container-Images wird also gerade ausgeführt, d.h. eine bestimmte Applikation wird innerhalb einer Container-Instanz betrieben.

Unter Laufzeitumgebung kann beispielsweise ein Gerät oder eine Vorrichtung verstanden werden, die derart eingerichtet sind, einen Programmcode auszuführen. Hierzu kann das Gerät oder die Vorrichtung beispielsweise eine Prozessoreinheit (CPU) aufweisen, die den Programmcode ausführt. Die Laufzeitumgebung kann selbst in Software oder in Hardware realisiert sein. Die Laufzeitumgebung ermöglicht dabei die Ausführung von Programmcode. Eine Laufzeitumgebung kann durch mindestens einen umgebungsspezifischen Parameter beschrieben werden, z.B. der Maschinentyp / CPU-Typ, Version des Host-Betriebssystemkernels, Linux-Distribution, installierte Pakete, andere laufende Prozesse, etc.

Unter Programmcode kann im vorliegenden Zusammenhang eine Applikation (App) und/oder ein Programm und/oder Programmbefehle und/oder ein Container-Image verstanden werden. Linux Container, z.B. unter Verwendung von Docker oder runC, ermöglichen beispielsweise die Ausführung eines Container-Speicherabbilds (Container-Image) und der darin enthaltenen Software-Applikation in einer isolierten Ausführungsumgebung, die auf eine Laufzeitumgebung der oben beschriebenen Art aufgesetzt werden kann. Container-Instanzen können beispielsweise verwendet werden, um flexibel unterschiedliche (App-)Funktionalitäten auf einem Steuergerät bzw. Feldgerät auszuführen. Eine Container-Instanz bzw. das Container-Image werden daher auch als Container-App bezeichnet.

Möchte man eine Container-Instanz starten bzw. in Betrieb nehmen, sollte überprüft werden, dass die für eine Container-Instanz gewünschten Ausführungsbeschränkung, auch Restriktionen (z.B. Zugriffsberechtigungen, Speicherlimits, Lizenzschlüssel...) genannt, der Ausführungsumgebungen auch tatsächlich umgesetzt sind. Des Weiteren ist nicht sichergestellt, dass im IoT-Umfeld (IoT = Internet of Things) eine Container-Instanz auf dem dafür vorgesehenen Endgerät(-typ) läuft. Dies führt dazu, dass wenn eine Container-Instanz gestartet wird, das Risiko besteht, dass eine Container-Software der Ausführungsumgebung zu viele Rechte bzw. zu wenige Ausführungsbeschränkungen, auch Restriktionen (z.B. Zugriffsberechtigungen, Speicherlimits, Lizenzschlüssel...) genannt, zuweist.

Bei Virtualisierungsmethoden wie Containern ist besonders kritisch, dass sich unterschiedliche, isoliert ausgeführte Container-Instanzen den gleichen Betriebssystem-Kernel teilen. Für die Verwendung in einem sicherheitskritischen Umfeld besteht daher Bedarf an einer verbesserten Überwachung, insbesondere beim Starten einer Container-Instanz.

Aus der Patentanmeldung EP3557463 A1 ist ein Verfahren und eine Ausführungsumgebung zum Ausführen von Programmcode auf einem Feldgerät bekannt.

Aus US 10,146,936 B1 ist ein sogenannter Storage intrusion detector bekannt, welcher dazu konfiguriert ist, zu erkennen, unter welchen Bedingungen ein Prozess, welcher nicht mit einem gegebenen Container der vorhandenen Container assoziiert ist, versucht, auf einen Datenspeicher, welcher für diesen gegebenen Container bereitgestellt ist, zuzugreifen.

Hierbei wird durch Verwendung von Überprüfungsfunktionen die Zulässigkeit einzelner, sicherheitskritischer Operationen anhand von Ausführungsanforderungen beim Starten/Ausführen eines Containers überprüft.

Der Erfindung liegt daher die Aufgabe zugrunde, ein Verfahren und eine Vorrichtung derart auszugestalten, dass eine gegenüber dem Stand der Technik noch sicherere Inbetriebnahme einer Container-Instanz in einer oder mehreren Ausführungsumgebungen gewährleistet wird.

Diese Aufgabe wird durch die Merkmale gemäß den unabhängigen Patentansprüchen gelöst. Vorteilhafte Ausführungsformen der vorliegenden Erfindung sind in den abhängigen Ansprüchen beschrieben.

Die Erfindung beansprucht Verfahren zur sicheren Inbetriebnahme einer Container-Instanz in einer oder mehreren Ausführungsumgebungen für eine oder mehrere Komponenten einer technischen Anlage, wobei eine solche Ausführungsumgebung zur Ausführung der Container-Instanz eingerichtet wird und/oder ist,
gekennzeichnet durch folgende Verfahrensschritte:
a) Bereitstellen einer konfigurierbaren Prüffunktion, die vor und/oder während der Inbetriebnahme der Container-Instanz ausgeführt wird,
b) Protokollieren eines jeden Schrittes zum Einrichten von mindestens einer für die Inbetriebnahme und/oder für das Ausführen der Container-Instanz erforderlichen Ausführungsbeschränkung,
c) Überprüfen jedes protokollierten Schrittes mit Hilfe wenigstens eines in der Prüffunktion konfigurierten Zulässigkeitskriteriums und
d) Vollenden der Inbetriebnahme und gegebenenfalls der Ausführung der Container-Instanz, wenn das wenigstens eine Zulässigkeitskriterium erfüllt ist, oder
e) Einleiten einer alarmierenden oder einer der Inbetriebnahme entgegenwirkenden Maßnahme, wenn wenigstens eines der möglichen Zulässigkeitskriterien nicht erfüllt ist.

Ein Zulässigkeitskriterium ist dabei ein Fingerabdruck (engl. Fingerprint). Es sind auch mehrere Fingerabdrücke abhängig vom Typ einer Ausführungsumgebung möglich.

Die mehreren Ausführungsumgebungen können verteilt bzw. parallel auf verschiedenen elektronischen Einrichtungen wie Rechnern, Geräten, Maschinen laufen, die Komponenten einer technischen Anlage z.B. einer Fabrik oder anderen Automatisierungsanlagen darstellen können.

Die Schritte können auch als Phasen bzw. Stufen beim Einrichten der erforderlichen Ausführungsbeschränkung oder mehreren Ausführungsbeschränkungen sein.

Container-Instanzen werden normalerweise in mehreren Schritten gestartet bzw. in Betrieb genommen. Bevor die Container-Instanz gestartet wird, stellt eine Container-Software, z.B. Docker, eine Container-bezogene Ausführungsumgebung für die Container-Instanz zur Verfügung, welche die Container-Instanzen stoppt und/oder startet, die Container-Images lädt und Ressourcen für die Container-Instanzen bereitstellt. Diese ist auch über einen entsprechenden Container-Instanz-Prozess sichtbar, welcher auch den Container-Init-Prozess und somit die Container-Instanz selbst startet. Ausführungsbeschränkungen der Ausführungsumgebung (z.B. Zuweisen von SELinux-Kontexten, Verwerfen von Fähigkeiten (Capabilities), Etablieren von Namespaces, ...) sind folglich in diesem Container-Ausführungsumgebungs-Prozess einzurichten oder beim Start zu übergeben. Konformitätsüberprüfungen, d.h. das Überprüfen anhand von Zulässigkeitskriterien, für die Ausführungsumgebung müssen auch beim Start dieses Prozesses erfolgen.

Die Konformität der Ausführungsumgebung für eine Instanz kann durch eine konfigurierbare Prüffunktion überprüft werden, indem jede zu überprüfende Ausführungsbeschränkung (z.B. SELinux-Kontext)und ggf. auch sämtliche sicherheitskritische Operationen und definierte Umgebungsparameter (z.B. Maschinentyp oder Lizenzschlüssel), die Teil des Einrichtens bzw. der Einrichtungsschritte der Ausführungsumgebung einer Container-Instanz sind, protokolliert wird. Die Prüffunktion kann von extern oder durch die Container-Instanz selbst durchgeführt werden.

Für jede Ausführungsbeschränkung wird jeweils ein Hashwert ermittelt und protokolliert.

Alle ermittelten Hashwerte werden in jedem solchen Schritt zu einem Gesamtwert miteinander verknüpft, und der Gesamtwert sowie dessen sich mit jedem Schritt ergebende Änderung protokolliert.

Beispielsweise kann von einer Datei des Protokolls in einem ersten Schritt ein Hashwert gebildet werden. Bei jeder Dateiänderung kann in einem nächsten Schritt der Hashwert dadurch gebildet werden, in dem der zuvor gebildete Hashwert mit dem Hashwert der geänderten Datei konkateniert und anschließend gehasht wird. Dies kann auch als laufender Hashwert bezeichnet werden. Bei einer Hex-addition kommt bei jedem Schritt ein weiterer Wert zur Summe der Werte hinzu. Durch die Art der Verknüpfung **(z.B.** laufender Hashwert) aller Hashwerte miteinander kann sich eine Reihenfolge der obengenannten Schritte zum Einrichten der mindestens einen Ausführungsbeschränkung ergeben.

Der Gesamtwert wird durch einen Fingerabdruck repräsentiert.

Der Gesamtwert wird mit dem korrespondierenden konfigurierten Zulässigkeitskriterium verglichen. Danach bestimmt sich, ob das Zulässigkeitskriterium erfüllt wird.

Neben der mindestens einen Ausführungsbeschränkung können zudem ein oder mehrere Umgebungsparameter der Ausführungsumgebung protokolliert werden und beim Bilden des Gesamtwertes mitberücksichtigt werden. Damit kann die Container-Instanz auf unterschiedlichen Ausführungsumgebungen **(z.B.** Testumgebung und Produktivumgebung) - wie bereits oben erwähnt - in Betrieb genommen werden.

Während des Ausführens der Containerinstanz können die Schritte c) bis e) bedarfsweise (On demand per Nutzerinteraktion), ereignisgesteuert (event-basiert) und/oder zeitgesteuert (zyklisch in Zeitabständen) wiederholt werden.

Eine der Inbetriebnahme entgegenwirkende Maßnahme kann folgendes sein:
- wenn der Start des Container-Init-Prozesses verhindert,
- ein Schaltsignal gesetzt, oder
- z.B. der Gerätezustand geändert wird.

Eine alarmierende Maßnahme kann sein, wenn das Ereignis auch geloggt wird und eine Alarmnachricht bzw. -signal ausgegeben wird. Die Reaktion bzw. Maßnahme kann auch je nach Container-Image oder Image-Herkunft anders ausfallen. Erkennt eine Container-Instanz beispielsweise, dass ihre Laufzeitumgebung nicht wie erwartet eingerichtet wurde, kann diese z.B. die Ausführung verweigern.

Die Erfindung ermöglicht somit einen besseren und flexibleren Schutz der Geräte vor schadhafter Nutzung durch einen Angreifer. Dies kann zu einer Verbesserung in der Sicherheit und Nachhaltigkeit von Produkten beitragen. Außerdem kann durch dieses Verfahren verhindert werden, dass Container-Instanzen auf nicht für sie vorgesehenen Endgeräten (z.B. fehlende Lizenz für die Container-Instanz) bzw. Ausführungsumgebungen betrieben werden.

Generell kann durch das Protokollieren das Überprüfen von Änderungen der Ausführungsumgebung von Container-Instanzen erleichtert werden (z.B. für User-space monitoring Prozesse, bzw. ein Monitoring in einem höher-liegenden System wie Aqua-Sec et al.).

Analog zum obigen Verfahren ist ein weiterer Aspekt der Erfindung eine Vorrichtung zur sicheren Inbetriebnahme einer Container-Instanz in einer oder mehreren Ausführungsumgebungen für eine oder mehrere Komponenten einer technischen Anlage, wobei eine solche Ausführungsumgebung zur Ausführung der Container-Instanz eingerichtet ist,
gekennzeichnet durch:
a) eine, eine konfigurierbare Prüffunktion aufweisende Prüfeinheit, die dazu ausgelegt ist, die Prüffunktion vor und/oder während der Inbetriebnahme der Container-Instanz auszuführen,
b) Protokolliereinheit, die dazu ausgelegt ist, jeden Schritt zum Einrichten von mindestens einer für die Inbetriebnahme und/oder für das Ausführen der Container-Instanz erforderlichen Ausführungsbeschränkung zu protokollieren, für die jeweils ein Hashwert ermittelt und protokolliert wird, wobei alle ermittelten Hashwerte in jedem solchen Schritt zu einem Gesamtwert miteinander verknüpft werden, und der Gesamtwert sowie dessen sich mit jedem Schritt ergebende Änderung protokolliert werden,
c) wobei die Prüfeinheit jeden protokollierten Schritt durch Vergleich des Gesamtwerts mit einem in der Prüffunktion konfigurierten Zulässigkeitskriterium vergleicht und
d) Inbetriebnahmeeinheit, die dazu ausgelegt ist, die Inbetriebnahme und gegebenenfalls die Ausführung der Container-Instanz zu vollenden, wenn das wenigstens eine Zulässigkeitskriterium erfüllt ist, oder
e) eine alarmierende und/oder der Inbetriebnahme entgegenwirkende Maßnahme einzuleiten, wenn wenigstens eines der möglichen Zulässigkeitskriterien nicht erfüllt ist.

Der Gesamtwert wird durch einen Fingerabdruck repräsentiert und ein Zulässigkeitskriterium ist dabei ein Fingerabdruck (engl. Fingerprint).

Die Vorrichtung kann zumindest einen intern integrierten oder einen von extern angebundenen Speicher aufweisen, in welchem die Prüfeinheit angeordnet ist bzw. in welchem die Prüffunktion als Prüfeinheit gespeichert ist.

Des Weiteren wird ein Computerprogrammprodukt umfassend ein nichtflüchtiges Speichermedium, auf dem ein ladbarer und ausführbarer Programmcode gespeichert ist, welches das Verfahren nach einem der oben genannten Ausführungsformen in einer Prozessoreinheit insbesondere einer Vorrichtung nach einer der vorhergehend beschriebenen Ausführungsformen ausführt.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass die Ausführungsumgebung erstellt werden kann.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es die Ausführungsumgebung erstellt werden kann.

Das Verfahren, die Anordnungen, Einrichtungen, Einheiten bzw. Geräte, Module und Computerprogramm(produkte) können entsprechend der Weiterbildungen/Ausführungsformen der vorgenannten Digitalen Schaltanordnung und deren Weiterbildungen/Ausführungsformen und umgekehrt ausgebildet sein.

Eine Ausführungsform der Erfindung sieht vor, dass eine Einheit bzw. Komponente, insbesondere eine Kommunikationseinheit bzw. Netzwerkkomponente, als eine Hardware-Komponente ausgebildet ist. Eine Einheit bzw. Komponente kann einen Prozessor umfassen. Subeinheiten einer größeren Einheit bzw. Hardware-komponente können in Software, Firmware bzw. wiederum in Hardware implementiert sein.

Bei einem Prozessor bzw. Prozessoreinheit kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit) oder um ein Multi-Chip-Modul handeln, insbesondere einen FPGA (engl. Field Programmable Gate Array) oder einen ASIC (anwendungsspezifische integrierte Schaltung, engl. Application-Specific Integrated Circuit), ein SoC (System on Chip) einen Grafikprozessor GPU (Graphics Processing Unit), einen Prozessor zur Auswertung eines neuronalen Netzes wie beispielsweise eine TPU (Tensor Processing Unit) oder einen DSP (Digitaler Signalprozessor, engl. Digital Signal Processor) handeln. Der Prozessor kann eine oder mehrere Rechenkerne (multi-core) aufweisen. Auch kann unter einem Prozessor ein virtualisierter Prozessor oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens oder anderer Aspekte und Teilaspekte der Erfindung implementiert. Der Prozessor kann einen Tamper-Schutz zum Schutz vor physikalischen Manipulationen aufweisen, **z.B.** Tamper-Sensoren zur Detektion physikalischer Angriffe.

### Ausführungsbeispiele der Erfindung

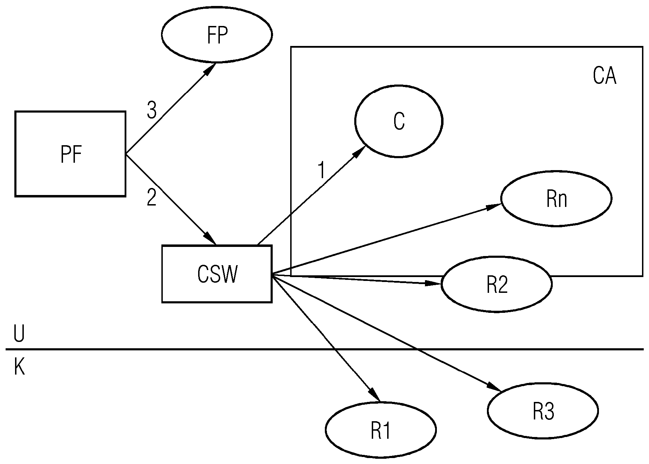

Ausführungsbeispiele des erfindungsgemäßen Verfahrens und der Übertragungsvorrichtung sind in den Zeichnungen beispielhaft dargestellt und werden anhand der nachfolgenden Beschreibung näher erläutert. Es zeigt:
Die Figur zeigt eine beispielhafte Ausführungsform einer Komponente einer technischen Anlage

In der Figur wird eine beispielhafte Konstellation einer Komponente mit einer Schnittstelle zwischen dem Betriebssystem K (auch Kernel-Space genannt) und der Anwenderumgebung U (auch User-Space genannt) dargestellt. Es werden Ressourcen R1 und **R3 z.B.** Prozessoreinheiten auf Betriebssystemseite und Ressourcen R2 **z.B.** eine Netzwerkschnittstelle oder Peripheriegeräteschnittstelle bzw. Rn **z.B.** ein Speicher auf der Anwenderumgebungsseite gezeigt. Es ist möglich, dass die Container-Instanz C unter anderem mit den Ressourcen R2 und Rn eine Container-bezogene Ausführungsumgebung CA bilden, das mit dem Kästchen angedeutet wird. Container-Instanzen werden in mehreren Schritten in Betrieb genommen bzw. gestartet. Eine Container-Software CSW **z.B.** Docker startet im Beispiel eine Container-Instanz C (siehe Schritt mit 1 gekennzeichnet).

Eine Protokolliereinheit, welche zusammen mit einer Prüfeinheit zusammen in einem Speicher auf der Anwendungsumgebungsseite eine in der Figur mit PF gekennzeichneten Prüffunktion umfassen kann, kann die Schritte zum Starten der Container-Instanz C protokollieren (siehe Schritt mit 2 gekennzeichnet) und auf Konformität bzw. Zulässigkeit prüfen (siehe Schritt mit 3 gekennzeichnet). Insbesondere das Einrichten der Ausführungsbeschränkungen (Capabilities, Namespaces, MAC-Domäne), aber z.B. auch das im Container ausgeführte Kommando (z.B. inklusive der übergebenen Kommandozeilenargumente) oder die Existenz von Informationen über die Ausführungsumgebung (Maschinentyp, beliebige weitere umgebungsspezifische Parameter) kann Teil der protokollierten Schritte sein. Somit lässt sich der Startvorgang einer Container-Instanz überprüfen.

Bevor die Container-Instanz C gestartet wird, stellt die Container-Software eine Container-bezogene Ausführungsumgebung für die Container-Instanz zur Verfügung. Diese ist auch über einen entsprechenden Container-Instanz-Prozess sichtbar, welcher auch den Container-Init-Prozess und somit die Container-Instanz selbst startet. Ausführungsbeschränkungen der Container-Ausführungsumgebung (z.B. Zuweisen von SELinux-Kontexten, Droppen von Capabilities, Einrichten von Namespaces, ...) sind folglich in diesem Container-Ausführungsumgebungs-Prozess umzusetzen oder beim Start zu übergeben. Konformitätsüberprüfungen für die Ausführungsumgebung müssen auch beim Start dieses Prozesses erfolgen.

Die Konformität der Ausführungsumgebung für eine Instanz C kann überprüft werden, indem initial für jede zu überprüfende Ausführungsbeschränkung (z.B. SELinux-Kontext) ein eindeutiger Wert (z.B. kryptographischer Hash) ermittelt wird und sämtliche Werte für alle zu überprüfenden Eigenschaften miteinander zu einem Gesamtwert verknüpft werden (z.B. über Hex-Addition, laufender Hashwert, etc.). Dieser über alle Eigenschaften ermittelte Gesamtwert bildet somit eine "Rechte-Signatur" (Fingerabdruck) FP, welche die Ausführungsbeschränkungen der Ausführungsumgebung eines dedizierten Container-Images repräsentiert.

Dieser Fingerabdruck FP wird mit dem Image gespeichert und muss für jeden, der Zugriff auf das Image hat, auch abrufbar und überprüfbar sein. Zudem kann dieser Wert als Teil eines signierten Container-Images gespeichert werden. Damit unterschiedliche Ausführungsumgebungen für das gleiche Container-Image berücksichtigt werden können, ist das Bereitstellen mehrerer, verschiedener Fingerabdrücke für ein einzelnes Container-Image denkbar. So kann einer Container-Instanz **z.B.** ein erster, sehr restriktiver Rechtesatz in einer Produktivumgebung bereitgestellt werden und ein weniger eingeschränkter Rechtesatz in einer Entwicklungsumgebung.

Soll ein Container-Image auf einer Ausführungsumgebung ausgeführt und die Ausführungsbeschränkungen bzw. Restriktionen überprüft werden, überprüft eine Prüffunktion PF die Container-Instanz C zur Laufzeit auf Zulässigkeit bzw. Konformität. Dies kann beispielsweise ein dedizierter Prozess des Betriebssystems sein, wie **z.B.** ein HIDS-Prozess, oder der zum Aufsetzen des Containers verwendete Container-Service (z.B. Docker Daemon). Ein dedizierter Teil des Betriebssystem-Kernels kann der ermittelte Fingerabdruck FP über eine entsprechende Schnittstelle (z.B. Systemaufruf, sysfs-Eintrag) bereitstellen. Mittels eBPF (extended Berkeley Packet Filter) oder einem entsprechenden Kernel-Modul (Teil des Betriebssystemkerns) kann dann die Prüffunktion mit Hilfe des oben ermittelten Fingerabdrucks FP überwachen, welche Container-Images auf dem System gestartet werden sollen und wie die Ausführungsumgebung für diese Container-Instanz aufgesetzt bzw. eingeschränkt wurde. Für jede Rechtezuweisung/-beschränkung wird hierfür - wie oben beschrieben - ein eindeutiger Gesamtwert ermittelt, festgehalten und bereitgestellt. Die Prüffunktion erkennt, dass die Bereitstellung der Ausführungsumgebung der Container-Instanz abgeschlossen ist, sobald der Container-Init-Prozess gestartet werden soll. Sobald dieser Init-Prozess ausgeführt werden soll, überprüft die Prüffunktion, ob der zur Laufzeit ermittelte Fingerabdruck FP mit der erwarteten und ggf. konfigurierten Fingerabdruck als Zulässigkeitskriterium übereinstimmt und somit zulässig ist.

Sofern diese zulässig ist, startet eine Inbetriebnahmeeinheit, beispielsweise die Container-Software CSW, die Container-Instanz und lässt die Vollendung der Ausführung der Container-Instanz zu. Falls nicht zulässig, wird als Maßnahme beispielsweise der Start des Container-Init-Prozesses verhindert.

In einer Ausführungsform kann eine Container-Instanz selbst überprüfen, ob sie richtig gestartet wurde. Container-Instanzen können so z.B. auch überprüfen, ob andere Container-Instanzen, mit denen sie beispielsweise Daten austauschen, ordnungsgemäß gestartet wurden oder auch auf der für sie vorgesehenen Ausführungsumgebung laufen. Weiterhin kann das Aufsetzen der Ausführungsumgebung von gestarteten Container-Instanzen auch als Teil eines Measured-Boot Prozesses mit einem TPM (Trusted Plattform Module) in sog. Platform Configuration Registers (PCRs) festgehalten werden. Der darin festgehaltene Wert kann als Teil eines Remote-Attestation Vorgangs bereitgestellt werden. So kann z.B. Geräten, auf denen nur zulässige -Ausführungsumgebungen aufgesetzt wurden, der Zugriff auf einen Remote-Service erlaubt werden.

Wird eine Abweichung des ermittelten Fingerabdrucks FP von des erwarteten Fingerabdrucks erkannt, kann mit unterschiedlichen Maßnahmen reagiert werden. Neben der oben beschriebenen Ausführungsform, dass der Start des Container-Init-Prozesses verhindert wird, kann das Ereignis auch geloggt, ein Schaltsignal gesetzt, oder z.B. der Gerätezustand geändert werden. Die Maßnahme kann auch je nach Container-Image oder Image-Herkunft anders ausfallen, z.B. rein alarmierend sein. Erkennt eine Container-Instanz beispielsweise, dass ihre Ausführungsumgebung nicht wie erwartet eingerichtet wurde, d.h. unzulässig ist, kann diese z.B. die Ausführung verweigern, oder eine der obigen Maßnahmen ergreifen.

Neben den Ausführungsbeschränkungen können auch die Laufzeitumgebungen (z.B. vorhandene Geräte, Hardware, Host, Kernel-Versionen, Konfiguration sicherheitskritische Umgebungsparameter (z.B. sysctls, etc.)) in der Bildung bzw. Ermittlung des Fingerabdrucks FP mitberücksichtigt werden.

Zudem kann die Reihenfolge bei der Einrichtung der Ausführungsumgebung und/oder der Laufzeitumgebung berücksichtigt werden. Diese ergibt sich beispielsweise bei der Ermittlung des laufenden Hashwerts.

Es ist möglich, dass auch zu einem späteren Zeitpunkt (zyklisch, oder vor dem Erlauben eines Zugangs zu einem ein Service (remote oder im Betriebssystem selbst = ereignisgesteuert)) geprüft wird, ob eine Container-Instanz zulässig gestartet wurde.

Spätere Änderungen an der Ausführungsumgebung können verwendet werden, um den Fingerabdruck auch nach dem Starten des Containers weiterzuführen (so könnten mit dem Mechanismus Änderungen zu einem späteren Zeitpunkt erkannt werden).

Der Fingerprint kann z.B. auch durch das Betriebssystem verwendet werden, um das Ausführen der Container-Instanz zu stoppen, oder nur eingeschränkt zuzulassen (z.B. kein Netzwerkzugriff).

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Die Übertragungsvorrichtung kann ein oder mehrere Prozessoren aufweisen. Der Begriff "Prozessor", "zentrale Signalverarbeitung", "Steuereinheit" oder "Datenauswertemittel", umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

## Patentansprüche

1. Verfahren zur sicheren Inbetriebnahme einer Container-Instanz (C) in einer oder mehreren Ausführungsumgebungen für eine oder mehrere Komponenten einer technischen Anlage, wobei eine solche Ausführungsumgebung zur Ausführung der Container-Instanz eingerichtet wird und/oder ist,
**gekennzeichnet durch** folgende Verfahrensschritte:
a) Bereitstellen einer konfigurierbaren Prüffunktion (PF), die vor und/oder während der Inbetriebnahme der Container-Instanz ausgeführt wird,
b) Protokollieren eines jeden Schrittes zum Einrichten von mindestens einer für die Inbetriebnahme und/oder für das Ausführen der Container-Instanz erforderlichen Ausführungsbeschränkung, für die jeweils ein Hashwert ermittelt und protokolliert wird, wobei alle ermittelten Hashwerte in jedem solchen Schritt zu einem Gesamtwert miteinander verknüpft werden, und der Gesamtwert sowie dessen sich mit jedem Schritt ergebende Änderung protokolliert werden,
c) Überprüfen jedes protokollierten Schrittes durch Vergleich des Gesamtwerts mit wenigstens einem in der Prüffunktion konfigurierten Zulässigkeitskriterium, wobei der Gesamtwert durch einen Fingerabdruck repräsentiert wird und das Zulässigkeitskriterium ein Fingerabdruck ist, und
d) Vollenden der Inbetriebnahme und gegebenenfalls der Ausführung der Container-Instanz, wenn das wenigstens eine Zulässigkeitskriterium erfüllt ist, oder
e) Einleiten einer alarmierenden oder einer der Inbetriebnahme entgegenwirkenden Maßnahme, wenn wenigstens eines der möglichen Zulässigkeitskriterien nicht erfüllt ist.

2. Verfahren nach dem vorhergehenden Anspruch, **dadurch gekennzeichnet, dass** während des Ausführens der Container-instanz die Schritte c) bis e) bedarfsweise, ereignisgesteu-ert und/oder zeitgesteuert wiederholt werden.

3. Verfahren nach einem der vorhergehenden Ansprüche, **dadurch gekennzeichnet, dass** neben der mindestens einen Ausführungsbeschränkung zudem ein oder mehrere Umgebungsparameter der Ausführungsumgebung protokolliert werden und beim Bilden des Gesamtwertes mitberücksichtigt werden.

4. Vorrichtung zur sicheren Inbetriebnahme einer Container-Instanz (C) in einer oder mehreren Ausführungsumgebungen für eine oder mehrere Komponenten einer technischen Anlage, wobei eine solche Ausführungsumgebung zur Ausführung der Container-Instanz eingerichtet ist,
**gekennzeichnet durch**:
a) eine eine konfigurierbare Prüffunktion (PF) aufweisende Prüfeinheit, die dazu ausgelegt ist, die Prüffunktion vor und/oder während der Inbetriebnahme der Container-Instanz auszuführen,
b) Protokolliereinheit, die dazu ausgelegt ist, jeden Schritt zum Einrichten von mindestens einer für die Inbetriebnahme und/oder für das Ausführen der Container-Instanz erforderlichen Ausführungsbeschränkung zu protokollieren, für die jeweils ein Hashwert ermittelt und protokolliert wird, wobei alle ermittelten Hashwerte in jedem solchen Schritt zu einem Gesamtwert miteinander verknüpft werden, und der Gesamtwert sowie dessen sich mit jedem Schritt ergebende Änderung protokolliert werden,
c) wobei die Prüfeinheit jeden protokollierten Schritt durch Vergleich des Gesamtwerts mit einem in der Prüffunktion konfigurierten Zulässigkeitskriterium vergleicht, wobei der Gesamtwert durch einen Fingerabdruck repräsentiert wird und das Zulässigkeitskriterium ein Fingerabdruck ist, und
d) Inbetriebnahmeeinheit, die dazu ausgelegt ist, die Inbetriebnahmen und gegebenenfalls die Ausführung der Container-Instanz zu vollenden, wenn das wenigstens eine Zulässigkeitskriterium erfüllt ist, oder
e) eine alarmierende und/oder der Inbetriebnahme entgegenwirkende Maßnahme einzuleiten, wenn wenigstens eines der möglichen Zulässigkeitskriterien nicht erfüllt ist.

5. Vorrichtung nach dem vorhergehenden Anspruch, **gekennzeichnet durch** zumindest einen intern integrierten oder einen von extern angebundenen Speicher, in welchem die Prüfeinheit angeordnet ist.

6. Computerprogrammprodukt umfassend ein nichtflüchtiges Speichermedium, auf dem ein ladbarer und ausführbarer Programmkode gespeichert ist, welches das Verfahren nach einem der vorhergehenden Verfahrensansprüchen in einer Prozessoreinheit einer Vorrichtung nach einem der vorhergehenden Vorrichtungsansprüche ausführt.

## Claims

1. Method for securely starting up a container instance (C) in one or more execution environments for one or more components of a technical installation, such an execution environment being designed to execute the container instance,
**characterized by** the following method steps:
a) providing a configurable check function (PF) that is performed before and/or while the container instance is started up,
b) logging each step for preparing at least one execution limitation required for starting up and/or executing the container instance, for which limitation a respective hash value is determined and logged, all the determined hash values being combined with one another in each such step to form a total value, and the total value and the change therein that arises with each step being logged,
c) verifying each logged step by comparing the total value with at least one permissibility criterion configured in the check function, the total value being represented by a fingerprint and the permissibility criterion being a fingerprint, and
d) completing the startup and if necessary the execution of the container instance if the at least one permissibility criterion is satisfied, or
e) initiating an alerting measure or a measure that counteracts the startup if at least one of the possible permissibility criteria is not satisfied.

2. Method according to the preceding claim, **characterized in that** steps c) to e) are repeated as required, on an event-controlled basis and/or on a time-controlled basis while the container instance is executed.

3. Method according to either of the preceding claims, **characterized in that** besides the at least one execution limitation one or more environment parameters of the execution environment are also logged and are concurrently taken into consideration when forming the total value.

4. Device for securely starting up a container instance (C) in one or more execution environments for one or more components of a technical installation, such an execution environment being designed to execute the container instance,
**characterized by**:
a) a checking unit that has a configurable check function (PF) and is designed to perform the check function before and/or while the container instance is started up,
b) a logging unit designed to log each step for preparing at least one execution limitation required for starting up and/or executing the container instance, for which limitation a respective hash value is determined and logged, all the determined hash values being combined with one another in each such step to form a total value, and the total value and the change therein that arises with each step being logged,
c) the checking unit comparing each logged step by comparing the total value with a permissibility criterion configured in the check function, the total value being represented by a fingerprint and the permissibility criterion being a fingerprint, and
d) a startup unit designed to complete the startup and if necessary the execution of the container instance if the at least one permissibility criterion is satisfied, or
e) to initiate an alerting measure and/or a measure that counteracts the startup if at least one of the possible permissibility criteria is not satisfied.

5. Device according to the preceding claim, **characterized by** at least one internally integrated or an externally linked memory in which the checking unit is arranged.

6. Computer program product comprising a non-volatile storage medium on which a loadable and executable program code is stored that performs the method according to one of the preceding method claims in a processor unit of a device according to one of the preceding device claims.

## Revendications

1. Procédé destiné à la mise en service sécurisée d'une instance conteneur (C) dans un ou plusieurs environnement(s) d'exécution pour une ou plusieurs composante(s) d'une installation technique, dans lequel un tel environnement d'exécution est agencé pour exécuter l'instance conteneur,
**caractérisé par** les étapes suivantes :
a) fourniture d'une fonction de contrôle configurable (PF) qui est exécutée avant et/ou pendant la mise en service de l'instance conteneur,
b) consignation de chaque étape pour mettre en place au moins une limitation d'exécution nécessaire pour la mise en service et/ou pour l'exécution de l'instance conteneur, pour laquelle respectivement une valeur de hachage est déterminée et consignée, dans lequel toutes les valeurs de hachage déterminées sont reliées entre elles en une valeur totale à chacune de telles étapes, et la valeur totale ainsi que sa modification qui se produit à chaque étape sont consignées,
c) vérification de chaque étape consignée par comparaison de la valeur totale à au moins un critère d'admissibilité configuré dans la fonction de contrôle, dans lequel la valeur totale est représentée par une empreinte digitale et le critère d'admissibilité est une empreinte digitale, et
d) achèvement de la mise en service et le cas échéant de l'exécution de l'instance conteneur lorsque l'au moins un critère d'admissibilité est satisfait, ou
e) introduction d'une mesure de mise en alarme ou d'encontre à la mise en service lorsque au moins un des critères d'admissibilité possibles n'est pas satisfait.

2. Procédé selon la revendication précédente, **caractérisé en ce que** pendant l'exécution de l'instance conteneur, les étapes c) à e) sont répétées en étant gérées par les évènements et/ou le temps, au besoin.

3. Procédé selon l'une des revendications précédentes, **caractérisé en ce qu'**outre l'au moins une limitation d'exécution, un ou plusieurs paramètre(s) d'environnement de l'environnement d'exécution est/sont en outre consigné(s) et pris en compte lors de la formation de la valeur totale.

4. Dispositif destiné à la mise en service sécurisée d'une instance conteneur (C) dans un ou plusieurs environnement(s) d'exécution pour une ou plusieurs composante(s) d'une installation technique, dans lequel un tel environnement d'exécution est agencé pour exécuter l'instance conteneur
**caractérisé par** :
a) une unité de contrôle présentant une fonction de contrôle configurable (PF) qui est conçue pour exécuter la fonction de contrôle avant et/ou pendant la mise en service de l'instance conteneur,
b) une unité de consignation qui est conçue pour consigner chaque étape pour mettre en place au moins une limitation d'exécution nécessaire pour la mise en service et/ou pour l'exécution de l'instance conteneur, pour laquelle respectivement une valeur de hachage est déterminée et consignée, dans lequel toutes les valeurs de hachage déterminées sont reliées entre elles en une valeur totale à chacune de telles étapes, et la valeur totale ainsi que sa modification qui se produit à chaque étape sont consignées,
c) dans lequel l'unité de contrôle compare chaque étape consignée par comparaison de la valeur totale à un critère d'admissibilité configuré dans la fonction de contrôle, dans lequel la valeur totale est représentée par une empreinte digitale et le critère d'admissibilité est une empreinte digitale, et
d) unité de mise en service qui est conçue pour achever les mises en service et le cas échéant l'exécution de l'instance conteneur lorsque l'au moins un critère d'admissibilité est satisfait, ou
e) introduire une mesure de mise en alarme ou d'encontre à la mise en service lorsque au moins un des critères d'admissibilité possibles n'est pas satisfait.

5. Dispositif selon la revendication précédente, **caractérisé par** au moins une mémoire interne intégrée ou reliée de manière externe, dans laquelle l'unité de contrôle est disposée.

6. Produit de programme informatique, comprenant un support de mémoire non-volatile sur lequel un code de programme pouvant être chargé et exécuté est en mémoire, lequel exécute le procédé selon l'une des revendications de procédé précédentes dans une unité de processeur d'un dispositif selon l'une des revendications de dispositif précédentes.
